# FASCICULE DE BREVET EUROPEEN

(11) **EP 2 062 404 B1**
(45) Date de publication et mention de la délivrance du brevet: **24.04.2019**
(21) Numéro de dépôt: 07823736.9
(22) Date de dépôt: 23.08.2007
(51) Int. Cl.: H04L 12/58

(54) **PROCEDE ET SYSTEME D'ECHANGE DE MESSAGES POUR GARANTIR L'ANONYMAT D'UN EMETTEUR**
VERFAHREN UND SYSTEM ZUM AUSTAUSCH VON NACHRICHTEN ZUM GARANTIEREN DER ANONYMITÄT EINES SENDERS
METHOD AND SYSTEM FOR EXCHANGING MESSAGES TO GUARANTEE THE ANONYMITY OF A TRANSMITTER

(30) Priorité: 24.08.2006 FR 0653443
(43) Date de publication de la demande: 27.05.2009
(73) Titulaire: Orange, 75015 Paris (FR)
(72) Inventeur: LE LAIN, Florent, 56270 Ploemeur (FR); CALVIAC, Julien, 75013 Paris (FR); BRUN, Arnaud, 92100 Boulogne Billancourt (FR)
(74) Mandataire: Cabinet Beau de Loménie
(86) Numéro de dépôt international: PCT/FR2007/051836
(87) Numéro de publication internationale: WO 2008/023135

(56) Documents cités:
- WO-A-02/093436
- WO-A2-03/024074
- DE-A1- 19 638 072
- US-A- 5 590 184

## Description

### Domaine de l'invention

L'invention se situe dans le domaine des communications anonymes par messages, par exemple de type SMS (« Short Message Service ») ou MMS (« Multimedia Messaging Service »).

Plus précisément, l'invention concerne un procédé et un dispositif permettant de garantir l'anonymat d'un premier terminal de communication ayant émis un premier message par exemple de type SMS ou MMS à destination d'un deuxième terminal situé sur un réseau de télécommunications quelconque, tout en permettant au premier terminal de recevoir un message de réponse du deuxième terminal.

Actuellement, le service de messages courts ou SMS permet l'envoi et la réception, sur un réseau de télécommunications, de messages textuels. Actuellement, le service MMS permet l'envoi et la réception, sur un réseau de télécommunications, de messages multimédia (messages contenant du texte, des images, des sons, des vidéos ou de tout autre contenu multimédia).

Pour plus de renseignements concernant l'implémentation de services de messages courts (SMS), l'homme du métier pourra se référer aux documents de normalisation 3GPP (« 3rd Generation Partnership Project ») et notamment au document de spécifications techniques TS 23.040 intitulé « Technical Realization of the Short Message Service » (décembre 2005).

Pour plus de renseignements concernant l'implémentation du service MMS, l'homme du métier pourra se référer aux documents de normalisation 3GPP (« 3rd Generation Partnership Project ») et notamment au document de spécifications techniques TS 22.140 intitulé «Multimedia Messaging Service (MMS), stage 1» et au document TS 23.140 intitulé « Multimedia Messaging Service (MMS), stage 2 »

Ces types de services sont utiles non seulement aux communications entre abonnés dites communications interpersonnelles mais également aux communications entre un abonné et un ou plusieurs serveur(s) applicatif(s).

Initialement normalisé et déployé sur des réseaux de téléphonie mobile GSM (« Global System for Mobile Communication ») dits réseaux de deuxième génération (2G) et sur des réseaux de téléphonie mobile UMTS (« Universal Mobile Télécommunication System ») dits réseaux de troisième génération (3G), les services SMS et MMS sont aujourd'hui également proposés sur d'autres types de réseaux de télécommunications tels que des réseaux téléphoniques commutés (RTC).

Un des points communs à ces variantes est la présence de l'identité de l'émetteur (sous forme d'un identifiant le désignant de manière unique) dans un message émis par celui-ci et reçu par un destinataire, et ceci quelle que soit la nature du destinataire (abonné utilisateur du service ou serveur applicatif utilisant ce service).

Le destinataire est donc en mesure d'identifier l'émetteur du message et peut par conséquent lui répondre en lui envoyant un message court ou par tout autre moyen de communication mis à sa disposition pour se manifester auprès de l'émetteur originel. Pour cela, le destinataire utilise l'identifiant unique de l'émetteur originel contenu dans le message qu'il a reçu préalablement.

Le terme « émetteur SMS » utilisé par la suite désigne tout utilisateur d'un réseau de télécommunications muni d'un terminal adéquat lui offrant la possibilité d'envoyer et de recevoir des messages courts au sens du document 3GPP TS 23.040 précité.

De même, le terme « émetteur MMS » utilisé par la suite désigne tout utilisateur d'un réseau de télécommunications muni d'un terminal adéquat lui offrant la possibilité d'envoyer et de recevoir des messages multimédia au sens des documents de normalisation 3GPP TS 22.140 et 3GPP TS 23.140 intitulés respectivement « Multimedia Messaging Services (MMS) stage 1 » et « Multimedia Messaging Services (MMS) stage 2 ».

Un émetteur SMS/MMS dispose d'un identifiant qui lui est propre et qui l'identifie de manière unique sur un réseau de télécommunications. En particulier, dans le cas des réseaux de téléphonie mobile (2G/2.5G/3G), chaque émetteur SMS/MMS possède un numéro MSISDN (« Mobile Station Integrated Services Digital Network ») qui l'identifie de manière unique sur tout réseau de téléphonie mobile.

### Arrière plan de l'invention

L'anonymat d'un émetteur SMS/MMS correspondra, dans la suite de ce document, au masquage, par le réseau de télécommunications utilisé par l'émetteur, de son identité vis-à-vis du ou des destinataires du message SMS/MMS envoyé. De manière connue, l'identité de l'émetteur peut être absente du message reçu par le destinataire, ou remplacée par une nouvelle identité, associée temporairement à l'émetteur.

Dans le cas des services SMS, tout message court émis depuis un terminal est préalablement déposé sur un serveur de messages courts dénommé SMSC (« Short Message Service Centre ») qui est en charge de la livraison de ce message au destinataire, conformément au document de normalisation 3GPP TS 23.040 précité.

Certains types de SMSC offrent actuellement la possibilité à un émetteur SMS d'indiquer son souhait de voir son identité masquée de manière à garantir son anonymat.

Dans le cas où un émetteur souhaite activer cette fonctionnalité de masquage, il devra alors ajouter manuellement dans le corps du message court avant son envoi vers le serveur SMSC, un code spécifique indiquant au serveur SMSC qu'il doit anonymiser le message avant de l'envoyer au destinataire désigné dans ce message. Dès la réception du message à anonymiser, le SMSC détecte la présence de ce code qu'il interprète avant d'envoyer au destinataire un message dans lequel l'identité de l'émetteur n'apparaîtra pas, afin de garantir l'anonymat de ce dernier auprès du destinataire.

Toutefois, l'insertion manuelle d'un code par l'émetteur pose plusieurs problèmes d'usage d'un point de vue utilisateur.

Un inconvénient concerne le caractère ponctuel de la demande d'anonymat. En effet, le code doit être entré manuellement par l'émetteur pour chaque message devant être anonymisé. Ainsi, l'émetteur demande son anonymat à chaque message court envoyé, par exemple, en entrant le code spécifique du fournisseur du SMSC qui est consacré à la fonctionnalité d'anonymat.

Un autre inconvénient est lié à la communication et à la mémorisation du code à insérer dans les SMS à anonymiser. Pour que l'utilisateur utilise la fonctionnalité proposée sur le SMSC, l'opérateur auprès duquel il est abonné doit dans un premier temps le lui communiquer. Ce code, placé en début de message, doit être relativement discriminant et donc très distinguable d'un début de message standard. Sa mémorisation en sera d'autant plus difficile pour l'utilisateur.

Un autre inconvient est lié à la consommation de place dans un message SMS qui par nature est déjà court. En effet, le code s'insère dans la partie utile ou corps du SMS envoyé par l'utilisateur. Par conséquent, l'utilisation d'un code consacré à l'anonymisation du message implique que l'utilisateur doit retrancher du nombre total de caractères disponibles dans le corps du message SMS, la taille de ce code afin obtenir le nombre effectif de caractères qu'il reste à l'utilisateur pour composer son message SMS.

Un autre inconvénient concerne l'insertion du code dans un SMS comprenant des données. Etant donné que le code spécifique retenu par les constructeurs de SMSC pour utiliser la fonction d'anonymat est un code textuel, celui-ci risque d'être inutilisable dans le cas de l'envoi d'un SMS de données.

Une autre solution pour garantir l'anonymat de l'émetteur consiste à supprimer l'identifiant de l'émetteur du champ réservé à l'identité de l'émetteur dans le message émis par ce dernier, de sorte que ce champ soit vide lors de la réception du message par le destinataire. De manière optionnelle, le champ destiné à l'identité de l'émetteur peut être éventuellement complété par une chaîne alphanumérique sans équivoque du type "Inconnu", "0000000000" ou "Anonyme" dans le but d'informer le destinataire que l'émetteur du message n'a pas souhaité divulguer son identité. Dans ce cas, aucune réponse n'est permise vers l'émetteur originel.

D'autres serveurs SMSC sont adaptés à remplacer l'identifiant de l'émetteur par un alias, dans le message émis par ce dernier. Cette solution offre la possibilité au destinataire du message de répondre à l'émetteur, le serveur SMSC mettant en oeuvre une logique d'association entre l'alias, l'identifiant de l'émetteur et éventuellement celui du destinataire.

Pour cela, le SMSC en question doit capter le message de réponse émis par le destinataire, afin de le traiter. Une solution consiste à utiliser un paramètre particulier dit SMS Reply Path décrit dans le document de normalisation 3GPP TS 23.040 précité. Ce paramètre contraint le destinataire à utiliser le SMSC de l'émetteur si jamais il veut répondre au message reçu. Grâce à l'utilisation de ce paramètre, le SMSC de l'émetteur, système ayant aliasé le précédent SMS dans ce cas, s'assure ainsi de voir passer le message de réponse.

Néanmoins, l'utilisation du paramètre SMS Reply-Path présente des inconvénients. Au-delà des éventuels problèmes de traçabilité ou de facturation que l'utilisation de ce paramètre peut engendrer, il existe actuellement un nombre non négligeable de terminaux mobiles qui ne gèrent pas ou qui gèrent mal cette fonctionnalité.

Enfin, on notera que dans le cas où le destinataire est un serveur applicatif SMS, l'alias utilisé est généralement un numéro court qui présente plusieurs inconvénients. D'une part, la numérotation des serveurs applicatifs SMS est privée, c'est-à-dire qu'elle est propre à chaque réseau offrant le service SMS. D'autre part, un serveur applicatif identifié par un numéro court doit être connecté à l'ensemble des réseaux souhaitant offrir le service de réponse à un message anonymisé (ou aliasé), nécessitant des accords d'interopérabilité entre tous ces réseaux.

Dans le cas des services MMS, tout message multimédia émis depuis un émetteur MMS est déposé sur un serveur de messages multimédia dit MMSC (« Multimedia Message Service Centre ») qui est en charge de la livraison du message au destinataire.

Selon la norme MMS et conformément aux documents 3GPP TS 22.140 et 3GPP TS 23.140 précités, il est prévu qu'un émetteur MMS puisse cacher son identité lorsqu'il envoie un message MMS à un destinataire. Un émetteur MMS souhaitant ne pas divulguer son identité à un destinataire peut activer cette fonctionnalité en utilisant le champ dénommé « Address Hiding ». Dans ce cas, il est prévu que le MMSC substitue le numéro MSISDN de l'émetteur contenu dans le champ du message MMS comprenant l'adresse de l'émetteur par un texte prédéfini (par exemple : « Message Anonyme » ou « Adresse non fournie ») ou un alias correspondant à l'émetteur.

Toutefois, dans le cas particulier où un alias correspondant à l'émetteur est inséré par le MMSC, il n'est pas prévu dans la norme MMS, que cet alias puisse être utilisé pour permettre au destinataire de répondre au message reçu. Le document WO 02/093436 décrit un procédé de transmission par un consommateur d'une demande anonyme à destination d'un fournisseur de contenu ou de services par l'intermédiaire d'un réseau de télécommunication.

Le document DE 196 38 072 décrit un procédé pour rendre anonyme des opérations et relations de télécommunications dans des applications télématiques.

Le document US 5,590,184 décrit un système de protection de la confidentialité des communications par remplacement du numéro de la partie appelante par un numéro non assigné.

### Objet et résumé de l'invention

L'invention est définie dans les revendications.

Il est de plus décrit un procédé d'échange de messages SMS/MMS entre un premier terminal de communication identifié sur un premier réseau de télécommunications par un premier identifiant et un deuxième terminal de communication identifié sur un deuxième réseau de télécommunications par un deuxième identifiant, ledit procédé comprenant les étapes suivantes :
- interception d'un premier message émis par ledit premier terminal à destination dudit deuxième terminal, le premier message comprenant au moins ledit premier identifiant ;
- association dudit premier identifiant à une adresse de réponse permettant audit deuxième terminal de répondre audit premier terminal, ladite adresse de réponse étant accessible depuis le deuxième réseau ;
- mémorisation de ladite association ;
- remplacement, dans le premier message, dudit premier identifiant par ladite adresse de réponse, de manière à former un message anonymisé ;
- envoi dudit message anonymisé audit deuxième terminal ;
- réception d'au moins un deuxième message, émis par ledit deuxième terminal, à destination de ladite adresse de réponse, en réponse audit premier message, ledit deuxième message comprenant au moins ladite adresse de réponse ;
- remplacement, dans ledit deuxième message, de ladite adresse de réponse par le premier identifiant, à partir de ladite association, de manière à former un troisième message ;
- envoi dudit troisième message audit premier terminal.

L'invention concerne un procédé d'envoi d'un deuxième message numérique en réponse à un premier message numérique, ledit procédé comprenant :
- une étape de réception dudit premier message par au moins un deuxième terminal, ledit premier message comprenant comme adresse de réponse un troisième identifiant, caractérisé en ce que ledit procédé comprend en outre :
- une étape d'envoi dudit deuxième message depuis ledit deuxième terminal à destination dudit adresse de réponse, et
- une étape de remplacement dans ledit deuxième message dudit troisième identifiant par un premier identifiant d'un premier terminal, à partir d'une association fait préalablement entre ledit troisième identifiant et ledit premier identifiant.

Dans un mode de réalisation, le procédé est caractérisé en ce que ledit procédé comprend en outre :
- une étape d'interrogation d'un enregistreur de localisation nominal liée audit troisième identifiant, et
- une étape de transmission dudit deuxième message vers un dispositif de communication.

Dans un autre mode de réalisation, le procédé est caractérisé en ce que ledit procédé comprend en outre :
- une étape de passage dudit premier message par un serveur de messages multimédia et
- une étape de passage dudit deuxième message par le même serveur.

Ainsi, le procédé d'échange de messages selon l'invention permet à un premier terminal de communication souhaitant ne pas divulguer son identifiant (premier identifiant), d'échanger des messages de manière anonyme avec un deuxième terminal de communication situé sur un deuxième réseau quelconque.

Le fait que l'adresse de réponse soit accessible depuis le deuxième réseau permet à n'importe quel deuxième terminal situé sur ce réseau et ayant reçu le premier message, d'y répondre en émettant des deuxièmes messages à destination de l'adresse de réponse.

Ainsi, le premier terminal de communication peut recevoir des deuxièmes messages en réponse à un premier message envoyé à un destinataire situé sur n'importe quel réseau de téléphonie fixe ou mobile.

Bien entendu, le deuxième réseau est un réseau quelconque apte à gérer des SMS/MMS. Les premier et deuxième réseaux peuvent être distincts ou bien constituer un même réseau de télécommunications. Cela dit, l'invention est particulièrement intéressante quand les opérateurs des premier et deuxième réseaux sont distincts, et donc en principe ne coopèrent pas.

Dans un mode de réalisation particulier, ladite adresse de réponse est choisie, lors de ladite étape d'association, dans une liste d'adresses conformes à la norme E.164.

Ainsi, l'adresse de réponse est une adresse, accessible par n'importe quel terminal situé sur un réseau de téléphonie fixe ou mobile. Cette adresse peut être par exemple utilisée par un serveur applicatif localisé sur un réseau de téléphonie fixe ou mobile pour transmettre des messages SMS/MMS à un utilisateur d'un téléphone fixe ou mobile.

De façon avantageuse, l'adresse de réponse respecte le format de numérotation internationale selon la norme E.164 telle que recommandée par l'ITU (« International Telecommunication Union »).

Etant donné qu'une telle adresse est accessible à partir de n'importe quel réseau de téléphonie mobile ou fixe, celle-ci permet donc à tout terminal de téléphonie fixe ou mobile, ayant reçu un message comprenant cette adresse, d'émettre en réponse un deuxième message à destination de cette adresse, l'adresse de réponse étant ensuite remplacée par l'identifiant du premier terminal.

Ainsi, un service d'anonymisation peut être mis en oeuvre de manière simple entre des terminaux de communication appartenant à des réseaux d'opérateurs distincts, évitant notamment la nécessité d'obtenir des accords d'interopérabilité entre les différents opérateurs de téléphonie fixe ou mobile.

Dans un mode de réalisation particulier, la liste d'adresse est préalablement allouée au premier réseau.

Dans un mode de réalisation particulier, la liste d'adresses est préalablement générée au sein du premier réseau.

Dans un mode de réalisation particulier, l'adresse de réponse est choisie parmi une liste de numéros de type MSISDN.

De façon avantageuse, un service d'anonymisation peut être mis en oeuvre de manière simple au sein d'un réseau mobile du type GSM / UMTS en se basant sur des protocoles de communication associés.

Dans un mode de réalisation particulier, l'adresse de réponse est mémorisée dans une base de données d'anonymat en attribuant une durée de validité à ladite association.

En adaptant cette durée de validité en fonction des caractéristiques des premiers et deuxièmes réseaux (densité de trafic), on peut minimiser le nombre d'adresses de réponse allouées.

Selon l'invention, l'adresse de réponse est associée à un couple d'identifiants comprenant les premier et deuxième identifiants.

En associant une adresse de réponse au couple formé par l'identifiant du deuxième terminal et celui du premier terminal, on réduit le nombre d'adresses de réponse allouées pour permettre au deuxième terminal de répondre au premier terminal après réception du premier message.

Il est décrit également un dispositif d'anonymisation de messages SMS/MMS entre un premier terminal de communication identifié par un premier identifiant sur un premier réseau de télécommunications et un deuxième terminal de communication identifié par un deuxième identifiant sur un deuxième réseau de télécommunications, ledit dispositif comprenant :
- des moyens d'interception d'un premier message émis par ledit premier terminal à destination dudit deuxième terminal, le premier message comprenant au moins l'identifiant du premier terminal ;
- des moyens d'association dudit premier identifiant à une adresse de réponse permettant au deuxième terminal de répondre au premier terminal, ladite adresse de réponse étant accessible depuis ledit deuxième réseau ;
- des moyens de mémorisation de ladite association ;
- des moyens de remplacement dans ledit premier message, dudit premier identifiant par ladite adresse de réponse, de manière à former un message anonymisé ;
- des moyens d'envoi du message anonymisé audit deuxième terminal ;
- des moyens de réception d'au moins un deuxième message, émis par le deuxième terminal à destination de ladite adresse de réponse, en réponse audit premier message, ledit au moins un deuxième message comprenant ladite adresse de réponse ;
- des moyens de remplacement, dans ledit au moins un deuxième message, de ladite adresse de réponse par ledit premier identifiant, à partir de ladite association, de manière à former un troisième message ;
- des moyens d'envoi du troisième message au premier terminal.

L'invention concerne également un dispositif d'envoi d'un deuxième message numérique en réponse à un premier message numérique, ledit dispositif comprenant :
- des moyens de réception dudit premier message par au moins un deuxième terminal, ledit premier message comprenant comme adresse de réponse un troisième identifiant, caractérisé en ce que ledit dispositif comprend en outre :
- des moyens d'envoi dudit deuxième message depuis ledit deuxième terminal à destination dudit adresse de réponse, et
- des moyens de remplacement dans ledit deuxième message dudit troisième identifiant par un premier identifiant d'un premier terminal, à partir d'une association fait préalablement entre ledit troisième identifiant et ledit premier identifiant,
l'adresse de réponse étant associée à un couple d'identifiants comprenant les premier et deuxième identifiants.

Dans un mode de réalisation particulier, le dispositif selon l'invention comporte des moyens d'obtention d'une liste d'adresses conformes à la norme E.164 préalablement allouées audit premier réseau, lesdits moyens de mémorisation étant adaptés à associer ledit premier identifiant à une adresse de réponse choisie parmi cette liste.

Le dispositif d'anonymisation disposera d'un lot d'adresses E.164 (un MSISDN au format international est une adresse E.164) réservées au réseau hébergeant ce système. Ces adresses, au lieu d'être attribuées à des abonnés mobiles, sont assignées au dispositif selon l'invention. Ce sont ces adresses qui sont utilisées par le dispositif selon l'invention en tant qu'alias connus et routables sur l'ensemble des réseaux inter-opérant, d'un point de vue SMS, avec le réseau émetteur de messages courts anonymes.

Dans un mode de réalisation particulier, l'adresse de réponse est choisie parmi une liste de numéros de type MSISDN (Mobile Station ISDN).

Ainsi, le portage d'un ensemble de MSISDN sur un dispositif d'anonymisation (pour masquer la réelle identité d'un émetteur SMS) est réalisé au coeur d'un réseau GSM/GPRS/UMTS, ce qui a pour avantage de rendre ce dispositif d'anonymisation atteignable de n'importe quel autre réseau mobile du même type, tout en s'appuyant sur le mécanisme standard de transmission d'un message court.

Dans un mode de réalisation particulier, le dispositif selon l'invention comporte un serveur de SMS.

Dans un mode de réalisation particulier, le dispositif selon l'invention adapté à simuler le comportement d'un MSC (« Mobile Switching Centre ») et d'un HLR (« Home Location Register ») en utilisant ladite adresse de réponse pour effectuer un routage dudit deuxième message sur ledit dispositif selon un protocole d'échange classique.

Dans un mode de réalisation particulier, le dispositif selon l'invention dispose d'une interface de configuration.

De façon avantageuse, cette interface de configuration pouvant être accessible à partir d'un client ou autre, permet ainsi de configurer à distance, le dispositif selon l'invention.

Dans un mode de réalisation particulier, le dispositif selon l'invention comporte en outre un module de contrôles d'autorisation.

De façon avantageuse, ce module de contrôles d'autorisation pouvant être accessible à partir d'un client ou autre, permet ainsi de configurer à distance, les autorisations de réponses (destinataires autorisés à répondre, nombre de réponses, etc.).

Dans un mode de réalisation particulier, le dispositif selon l'invention comporte en outre un module d'émission de tickets de facturation.

Dans un mode de réalisation particulier, permet la facturation de l'utilisation du dispositif visé par l'invention.

Il est possible de définir sur le dispositif selon l'invention, pour chaque utilisateur souhaitant émettre des messages SMS anonymisés : - la possibilité ou non pour les destinataires de répondre ;
- le nombre de réponses autorisées par destinataire d'un message anonymisé ; et
- le temps pendant lequel un destinataire a le droit de répondre à l'émetteur via l'adresse de réponse qui lui a été associée.

De manière optionnelle, l'émetteur peut définir ces paramètres lui-même par le biais d'un message SMS, de données USSD (« Unstructured Supplementary Services Data »), du réseau Internet ou d'un service clients.

Par conséquent, de manière avantageuse, l'anonymisation est ponctuelle, permanente, à réponse autorisée ou non, dans un délai imparti, avec un nombre de réponses limité, selon le souhait et les besoins de l'utilisateur du téléphone mobile émetteur de SMS désirant ne pas divulguer son identité. De plus, l'utilisateur du téléphone mobile destinataire peut répondre à l'utilisateur émetteur si ce dernier le lui autorise. Le procédé selon l'invention s'applique aux réseaux GSM/GPRS/UMTS leur offrant une flexibilité de gestion accrue par rapport aux procédés existants.

En variante, les différentes étapes du procédé selon l'invention décrit ci-dessus sont déterminées par des instructions de programmes d'ordinateurs.

En conséquence, l'invention vise également un programme d'ordinateur comportant des instructions pour l'exécution des étapes du procédé décrit ci-dessus lorsque ledit programme est exécuté par un ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise également un support d'enregistrement lisible par un ordinateur sur lequel est enregistré un programme d'ordinateur comprenant des instructions pour l'exécution des étapes du procédé selon l'invention décrit ci-avant.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-après, en référence aux dessins annexés qui en illustrent un exemple de réalisation dépourvu de tout caractère limitatif, sur lesquels :
- la figure 1 illustre de manière schématique un dispositif 100 selon l'invention placé en coupure de flux entre deux terminaux de communication appartenant à des réseaux de télécommunication distincts ;
- la figure 2A illustre, un exemple d'enchaînement d'étapes pour l'échange de messages SMS entre les deux terminaux de la figure 1, faisant intervenir le procédé selon l'invention ;
- la figure 2B illustre sous forme d'organigramme les étapes du procédé mises en oeuvre par le dispositif selon l'invention pour l'anonymisation d'un premier message SMS ;
- la figure 2C illustre sous forme d'organigramme les étapes du procédé mises en oeuvre par le dispositif selon l'invention pour l'envoi d'un message de réponse émis par le deuxième terminal ;
- la figure 3 illustre un mode particulier de réalisation du dispositif selon l'invention dans son environnement pour l'anonymisation d'un message SMS et la réponse à ce dernier ; et
- la figure 4 illustre un exemple d'enchaînement d'étapes mises en oeuvre pour l'échange de messages SMS dans le mode particulier de réalisation de la figure 3.

### Description détaillée

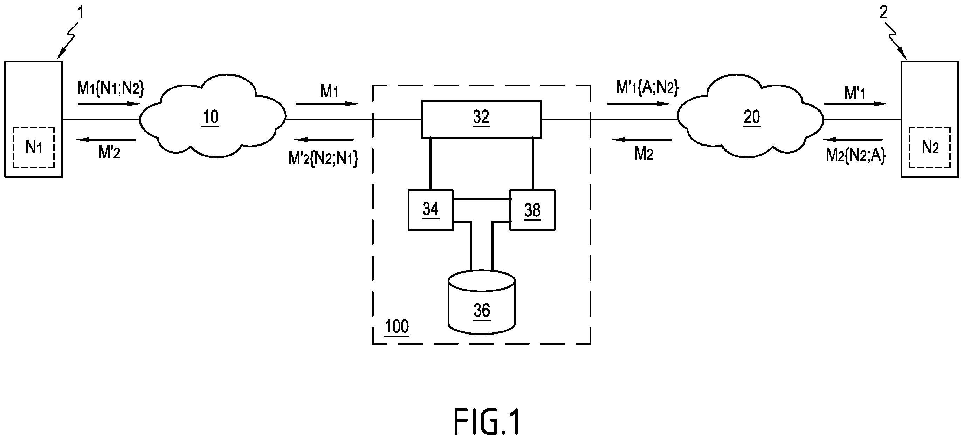

La figure 1, montre très schématiquement un dispositif 100 selon l'invention, placé en coupure de flux entre un premier terminal 1 de communication connecté à un premier réseau 10 de télécommunications et un deuxième terminal 2 de communication connecté à un deuxième réseau 20 de télécommunications.

Le premier terminal 1 de communication possède un identifiant N1 (premier identifiant) permettant de l'identifier de manière unique sur le premier réseau 10 de télécommunications. De la même manière, le deuxième terminal 2 de communication possède un identifiant N2 (deuxième identifiant) permettant de l'identifier de manière unique sur le deuxième réseau 20 de télécommunications.

On considère le cas où le premier terminal 1 échange des messages SMS avec le deuxième terminal 2 de communication, par l'intermédiaire du dispositif 100, de sorte que l'identifiant N1 du premier terminal 1 n'est pas divulgué au deuxième terminal 2, permettant ainsi de garantir l'anonymat du premier terminal 1.

Le dispositif 100 selon l'invention comporte :
- des moyens 32 de réception et d'envoi pour intercepter et émettre des messages SMS ;
- des moyens d'association 34 pour associer une adresse de réponse A au moins au premier identifiant N1 ;
- des moyens de mémorisation (ou base de données d'anonymat) 36 pour enregistrer cette association ;
- des moyens de remplacement 38 pour remplacer l'identifiant N1 du premier terminal 1 contenu dans un message SMS émis par le premier terminal 1 à destination du deuxième terminal 2, par l'adresse de réponse A, ou de manière réciproque pour remplacer l'adresse de réponse A contenue dans un message SMS de réponse M2 émis par le deuxième terminal 2 par l'identifiant N1 du premier terminal 1.

Dans un premier mode de réalisation de l'invention, le deuxième terminal 2 de communication est un serveur applicatif apte à recevoir et à émettre des messages SMS, ce serveur appartenant à un réseau IP tel que le réseau Internet.

Ainsi, le dispositif 100 est prévu pour s'interfacer avec le réseau Internet comprenant des serveurs applicatifs potentiellement destinataires des messages courts à anonymiser et aptes à répondre à ces messages.

Dans un deuxième mode de réalisation de l'invention (cas des communications interpersonnelles), les premier 1 et deuxième 2 terminaux de communication sont constitués respectivement par un terminal d'un utilisateur, tel qu'un un terminal de téléphonie mobile de type GSM ou UMTS apte à émettre et recevoir des messages SMS. Ces terminaux peuvent être aussi constitués par des appareils de téléphonie fixe apte à gérer des messages SMS.

Ainsi, le dispositif 100 est prévu pour s'interfacer avec le réseau de télécommunications 10 de l'opérateur auquel est abonné le premier terminal 1 et avec tout autre réseau 20 d'un opérateur dont les abonnés sont potentiellement destinataires des messages courts à anonymiser.

Dans un troisième mode de réalisation de l'invention, le dispositif 100 est adapté de manière à communiquer avec au moins un serveur applicatif SMS et avec au moins un terminal de téléphonie fixe et/ou mobile précités.

A titre d'exemple, l'interface de l'émetteur et celle du destinataire sont basées sur les spécifications techniques du document 3GPP TS 23.040, notamment dans le cas où les premier 1 et deuxième 2 terminaux sont des téléphones mobiles. On notera que ces interfaces peuvent se baser sur des protocoles spécifiques d'échanges de messages courts tels que UCP («Universal Computer Protocol»), SMPP («Short Message Peer to Peer») ou toute autre protocole selon que le deuxième 2 terminal est le terminal d'un abonné d'un opérateur ou un serveur applicatif.

On va maintenant décrire les échanges de messages mis en oeuvre notamment par le dispositif 100 pour garantir l'anonymat du premier terminal 1.

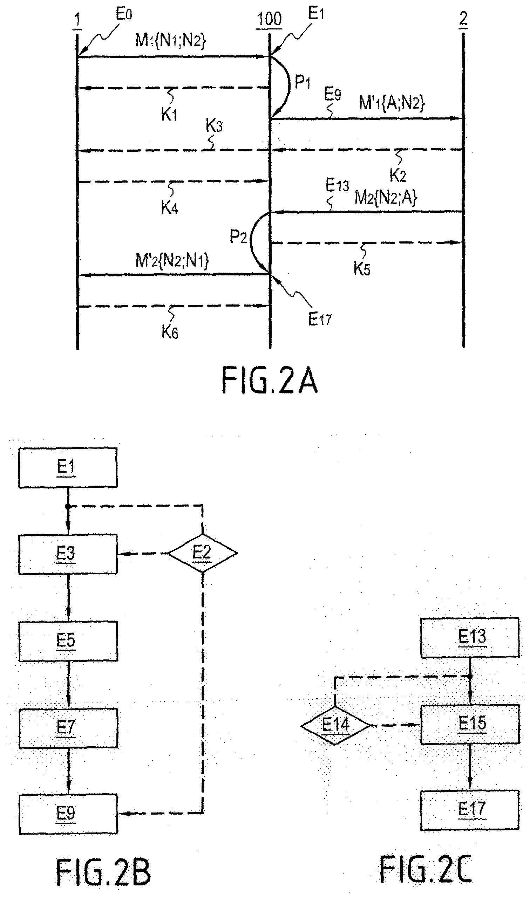

De manière générale et conformément à la figure 2A, lors d'une étape initiale de soumission E0, le premier terminal 1 envoie un message M1 (premier message) destiné au deuxième terminal 2. De façon connue, ce premier message M1 comporte un champ d'adresse émetteur et un champ d'adresse destinataire, contenant respectivement l'identifiant N1 du premier terminal (premier identifiant) et l'identifiant N2 du deuxième terminal (deuxième identifiant).

Lors d'une étape d'interception E1, le dispositif 100 intercepte le premier message M1 sur lequel il applique ensuite les étapes d'une première phase P1 dite phase d'anonymisation, destinée à anonymiser ce message M1 conformément au procédé selon l'invention. Cette phase P1 est décrite ci-après en référence à la figure 2B.

De manière optionnelle, après réception du premier message M1, le dispositif 100 émet un message d'accusé de réception K1 au premier terminal 1, pour informer ce dernier qu'il a bien reçu le premier message M1.

Conformément à la figure 2B, l'étape d'interception E1 marque le début de la phase P1 d'anonymisation. Suite à la réception du premier message M1, une étape de test E2 optionnelle est mise en oeuvre pour déterminer si le premier terminal 1 souhaite activer la phase d'anonymisation P1 pour garder son anonymat.

Dans le cas où le premier terminal 1 souhaite divulguer son identité auprès du deuxième terminal 2, le dispositif 100 envoie sans modification le premier message M1 à destination du deuxième terminal 2.

Dans le cas contraire, c'est-à-dire dans le cas où le premier terminal 1 souhaite garantir son anonymat, les moyens d'association 34 associent au premier identifiant N1 une adresse de réponse A, lors d'une étape d'association E3.

Par exemple, cette adresse de réponse A est obtenue par le dispositif 100 et stockée dans la base de données d'anonymat 36. Lors d'une étape de mémorisation E5, on mémorise dans cette base de données d'anonymat 36, l'identifiant N1 du premier terminal 1 en association avec l'adresse de réponse A.

Lors d'une étape de substitution E7 suivante, les moyens de remplacement 38 substituent, dans le champ émetteur du premier message M1, l'identifiant N1 du premier terminal 1 (émetteur) par l'adresse de réponse A, formant ainsi un message anonymisé M'1.

Les moyens d'association 34, la base de données d'anonymat 36, les moyens de remplacement 38 et les moyens d'envoi 32 sont implémentés, à titre d'exemple, par un même serveur SMSC situé au coeur du réseau 10 de l'opérateur auquel est abonné le premier terminal 1. Par exemple, la base de données d'anonymat 36 pourrait être implémentée au niveau d'un HLR (« Home Location Register ») du premier réseau 10.

Lors d'une étape d'envoi E9, les moyens d'envoi 32 émettent le message anonymisé M'1 à destination du deuxième terminal 2 (destinataire). Le deuxième réseau 20 se charge du routage du message anonymisé M'1, de manière à ce qu'il soit reçu par le deuxième terminal 2.

De manière optionnelle, après réception du message anonymisé M'1, le deuxième terminal 2 émet un accusé de réception K2 à destination du dispositif 100, qui émet lui-même en réponse un accusé de réception K3 à destination du premier terminal 1, de manière à informer ce dernier que le message anonymisé M'1 a bien été reçu par le deuxième terminal 2. Un accusé de réception optionnel K4 peut être envoyé par le premier terminal 1 au dispositif 100, en réponse à l'accusé de réception K3 émis par le dispositif 100.

Si le premier terminal 1 ou si l'opérateur auquel est abonné le deuxième terminal 2 autorise ce dernier 2 à répondre au message anonymisé M'1, le deuxième terminal 2 peut, s'il le souhaite, émettre un message de réponse M2 (deuxième message), lors d'une étape d'envoi E13.

Ce message de réponse M2 comporte un champ d'adresse destinataire et un champ d'adresse émetteur, contenant respectivement l'adresse de réponse A et l'identifiant N2 du deuxième terminal 2.

De manière optionnelle, après réception du message de réponse M2, le dispositif 100 émet un accusé de réception K5, de manière à informer le deuxième terminal 2 qu'il a bien reçu le message de réponse M2.

Dès réception de ce message M2 par le dispositif 100 (étape E13), on procède ensuite à une phase P2 de « dés-anonymisation » du message de réponse M2, qui consiste à remplacer l'adresse de réponse A par l'identifiant du premier terminal N1 à partir des informations enregistrées dans la base de données d'anonymat 36

Conformément à la figure 2C, lors d'une étape de test E14 optionnelle, on détermine si l'adresse du champ de destination du message de réponse M2 est enregistrée dans la base de données d'anonymat 36 et, si c'est le cas, si la durée de validité de l'adresse de réponse A n'a pas expiré. Si l'adresse du champ de destination du message de réponse M2 n'est pas enregistrée dans la base de données d'anonymat 36, il n'est pas possible d'acheminer le message de réponse au destinataire. Si l'adresse du champ de destination du message de réponse M2 est enregistrée dans la base de données d'anonymat, mais la durée de validité de l'adresse de réponse A a expiré, le message de réponse n'est pas acheminé au destinataire., Dans les deux cas évoqués ci-dessus, aucune modification du message de réponse M2 n'est effectué et aucun message de réponse n'est acheminé au destinataire.

Dans le cas contraire (enregistrement de l'adresse dans la base de données 36 et adresse en cours de validité), le dispositif 100 remplace (étape E15) dans le message de réponse M2, l'adresse du champ de destination (constituée ici par l'adresse de réponse A), par l'identifiant N1 du premier terminal 1, formant ainsi un message de réponse final M'2.

Lors d'une étape d'envoi E17, les moyens d'envoi 32 émettent le message de réponse final M'2 à destination du premier terminal 1 dont l'identifiant N1 est contenu dans le champ destination du message de réponse final M'2. Ainsi, le premier réseau 10 de télécommunications se charge du routage du message de réponse final M'2, de manière à ce qu'il soit reçu par le premier terminal 1.

De manière optionnelle, après réception du message de réponse final M'2, le premier terminal 1 émet un accusé de réception K6 à destination du dispositif 100, de manière à informer ce dernier qu'il a bien reçu le message de réponse final M'2.

L'invention va maintenant être décrite dans le cas de l'anonymisation d'un message SMS émis par un premier téléphone mobile 1 d'un abonné d'un premier réseau 10 de téléphone mobile et à destination d'un deuxième téléphone mobile 2 d'un abonné d'un deuxième réseau 20 de téléphonie mobile.

Dans cet exemple, les premier 1 et deuxième 2 téléphones mobiles n'appartiennent pas un même réseau de téléphonie mobile GSM/GPRS/UMTS. Bien que ces deux abonnés puissent appartenir à un même réseau, la présente invention est particulièrement avantageuse dans le cas où les deux terminaux de téléphonie mobile sont abonnés à des opérateurs distincts et indépendants.

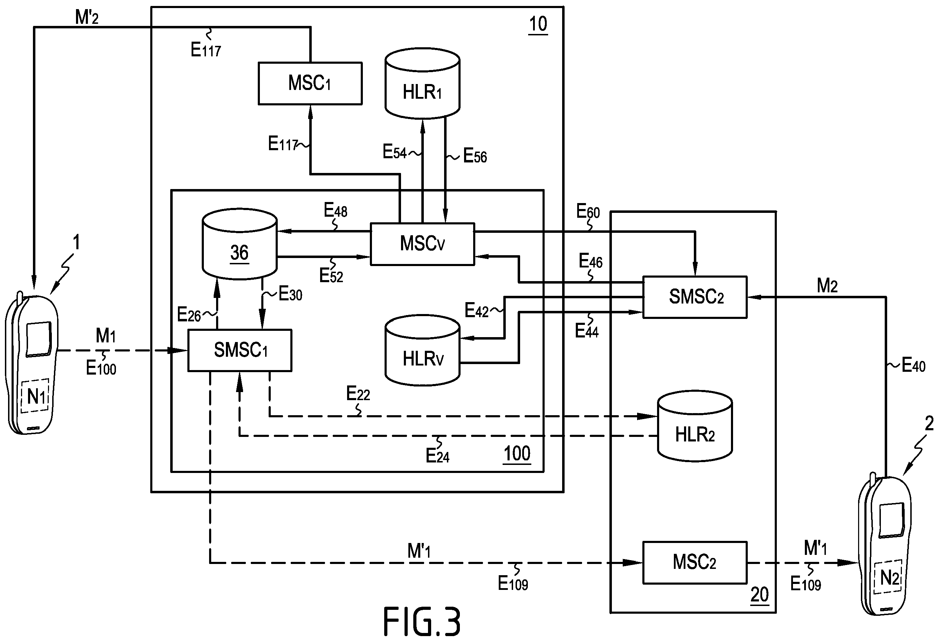

La figure 3 décrit un mode de réalisation du dispositif 100 selon l'invention sous la forme d'une plateforme d'anonymisation 100 dite PFA, placée en coupure de flux entre un premier 10 et un deuxième 20 réseau de télécommunications.

Le premier réseau 10 est un réseau GSM 10 d'un premier opérateur de téléphonie mobile auquel est abonné un premier terminal mobile 1 possédant un numéro MSISDN (MSISDN 1) référencé par N1 permettant de l'identifier de manière unique (premier identifiant). Ce réseau 10 comporte la plateforme d'anonymisation 100 selon l'invention, et un enregistreur de localisation nominal dit HLR (« Home Location Register ») et référencé HLR1 et un dispositif de commutation dit MSC (« Mobile Switching Centre ») et référencé MSC1.

La plateforme d'anonymisation 100 comprend un SMSC (« Short Message Service Centre») ou serveur de messages SMS référencé par SMSC1 et relié à une base de donnée d'anonymat 36. La plateforme d'anonymisation 100 implémente de manière virtuelle un MSC et un HLR notés respectivement MSCv et HLRv, de manière à respecter les échanges d'informations conformes aux protocoles classiques.

Le deuxième réseau 20 de télécommunication est un réseau GSM d'un deuxième opérateur de téléphonie mobile, auquel est abonné un deuxième terminal mobile 2 possédant un numéro MSISDN (MSISDN 2) référencé par N2 permettant de l'identifier de manière unique (deuxième identifiant). Ce deuxième réseau 20 comprend un SMSC, un HLR et un MSC, respectivement référencés par SMSC2, HLR2 et MSC2.

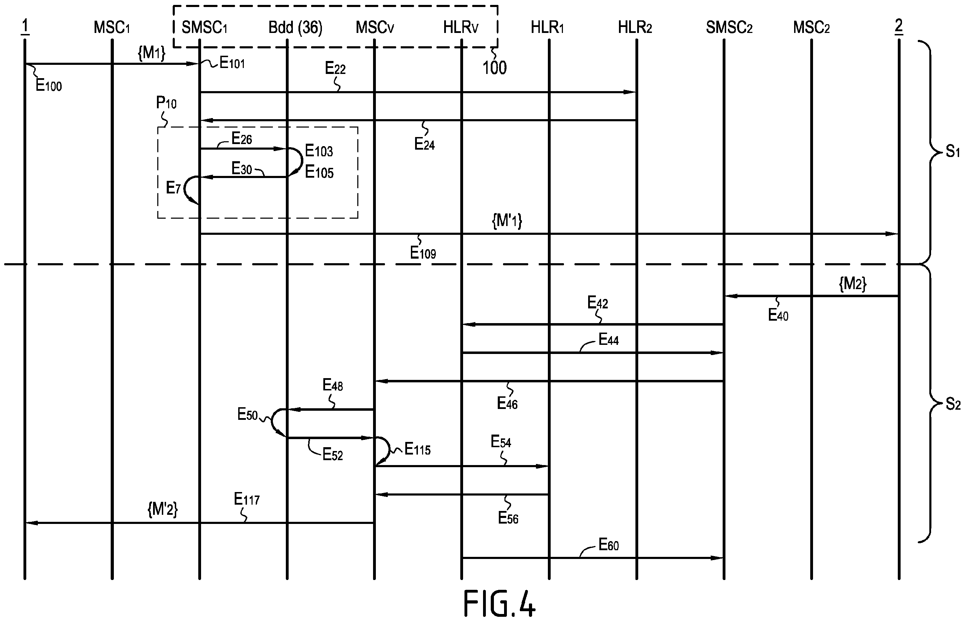

Le procédé d'échange de messages SMS conforme à l'invention va maintenant être décrit en référence aux figures 3 et 4.

La figure 4 représente les échanges d'informations effectués entre les différents équipements de la figure 3, lors d'une première séquence S1 pour l'envoi d'un SMS anonyme M'1 au deuxième terminal 2 et lors d'une deuxième séquence S2 pour la réponse à ce message anonyme M'1.

Les différentes étapes constitutives de chacune de ces deux séquences S1 et S2 vont maintenant être décrites séparément et en détail.

La première séquence S1 débute par l'étape initiale d'envoi E100 d'un message M1 court (SMS) par le premier terminal 1 (émetteur), à destination du deuxième terminal 2 (destinataire). Lors d'une étape d'interception E101, le message court M1 à anonymiser est intercepté par la plateforme d'anonymisation 100 et déposé sur le SMSC1 du premier réseau 10 auquel l'émetteur 1 est abonné.

Pour cela, le premier terminal émetteur 1 envoie un TPDU («Transfer Protocol Data Unit») sous forme d'un message SMS_SUBMIT, de manière connue selon le document 3GPP TS 23.040 précité. Les paramètres relatifs à ce message sont précisés dans le tableau 1 ci-dessous, pour trois couches protocolaires principales, à savoir la couche de signalisation SCCP (« Signalling Connection Control Part »), la couche MAP (« Mobile Application Part ») et la couche de transport SM-TL (« Short Message Transport Layer »).

**Tableau 1. Message « SMS-SUBMIT » : soumission de M1**

| | | |
|---|---|---|
| SM-TL | TP-DA | MSISDN2 |
| MAP | RP-OA | MSISDN1 |
| | RP-DA | AG SMSC1 |
| SCCP | Calling Party | AG MSC1 |
| | Called Party | AG SMSC1 |

Conformément au tableau 1 ci-dessus, le MSC1 (Calling Party) dont dépend le premier terminal 1 établit un canal de signalisation SS7 sur la couche de signalisation SCCP avec le SMSC1 (Called Party) du premier réseau 10. Ainsi, la couche SCCP comprend un champ désignant l'appelant (Calling Party) qui contient l'adresse globale (AG) du MSC1 notée AG MSC1 et un champ désignant l'appelé (Called Party) contenant l'adresse globale (AG) du serveur SMSC1 notée AG SMSC1.

La couche MAP comporte un champ d'adresse source noté RP-OA (« Relay Protocol Originating Address ») contenant le numéro MSISDN du premier terminal 1 (MSISDN1) et un champ d'adresse destination noté RP-DA (« Relay Protocol Destination Address ») contenant l'adresse globale (AG) du serveur SMSC1.

La couche de transport SM-TL spécifie le numéro MSISDN du deuxième terminal 2 (MSISDN2) dans un champ de destination noté TP-DA (« Transport Protocol - Destination Address »).

On notera que du point de vue de l'émetteur 1, la procédure est la même que celle utilisée lors du dépôt d'un message SMS classique (non anonyme) conformément à la norme SMS. Seul le numéro de centre de messages courts (SMSC) utilisé sur son terminal est différent dans le cas où le SMSC est dédié à l'anonymisation des messages SMS.

Ainsi, la PFA 100 prend en charge le message court reçu à la manière d'un SMSC classique. En particulier, la PFA 100 assure la fonction de « Store and Forward » telle que décrite dans le document 3GPP TS 23.040 précité, c'est-à-dire que la PFA 100 n'abandonne l'envoi du message que lorsque celui-ci est reçu par le destinataire ou lorsque la période de validité du message est dépassée.

La PFA 100 (plus précisément le SMSC1) s'enquiert auprès du HLR du destinataire (HLR2) d'informations de routage qui lui sont nécessaires pour délivrer le message court M1 au deuxième terminal 2.

Pour cela, le SMSC1 émet, lors d'une étape d'interrogation E22, une requête de routage « MAP_SEND_ROUTING_INFO_For_SM » conformément au document 3GPP TS 29.002 précité. Les paramètres utilisés dans cette requête figurent dans le tableau 2 ci-dessous.

**Tableau 2. Requête "MAP_SEND_ROUTING_INFO_For_SM"**

| | | |
|---|---|---|
| MAP | MSISDN | MSISDN2 |
| | SC Address | AG SMSC1 |
| SCCP | Calling Party | AG SMSC1 |
| | Called Party | MSISDN2 |

En réponse à cette requête de routage, le HLR2 transmet à la PFA 100 et plus précisément au SMSC1, lors d'une étape E24, les informations de routage dans une réponse « MAP_SEND_ROUTING_INFO_For_SM » conforme au document 3GPP TS 29.002 précité. Les paramètres utilisés dans cette réponse figurent dans le tableau 3 ci-dessous.

Ces informations sont transmises dans la couche MAP et sont constituées par l'IMSI (« International Mobile Subscriber Identifier ») du deuxième terminal 2 noté IMSI2 et par l'adresse globale du MSC2 (MSC sous la couverture duquel le deuxième terminal 2 se trouve) notée AG MSC2.

**Tableau 3. Réponse MAP_SEND_ROUTING_INFO_For_SM**

| | | |
|---|---|---|
| MAP | IMSI | IMSI2 |
| | Network Node Number | AG MSC2 |
| SCCP | Calling Party | AG HLR2 |
| | Called Party | AG SMSC1 |

Ensuite, la PFA 100 anonymise le message M1, lors d'une phase P10 d'anonymisation conformément à l'invention. Lors d'une étape de consultation E26, le SMSC1 consulte la base de données d'anonymat 36 de manière à obtenir une adresse de réponse A constituée par un alias numérique A unique associé au couple {MSISDN1, MSISDN2}.

Dans cet exemple, l'alias numérique A est un numéro MSISDN alloué au premier réseau 10 et attribué à la PFA 100 pour l'anonymisation de messages SMS. Par conséquent, l'alias A est connu et routable sur tout réseau de téléphonie mobile et en particulier le réseau 20 du destinataire 2.

On notera que, dans un souci d'économie des alias routables disponibles, l'alias est associé non seulement à l'identifiant de l'émetteur mais également à l'identifiant du destinataire, et pas seulement à l'identifiant de l'émetteur, d'où l'association de l'alias A au couple {MSISDN1, MSISDN2} .

De manière optionnelle, on pourra procéder à une étape de test pour déterminer si un alias est déjà associé à ce couple. En particulier, c'est le cas lorsqu'un message anonyme a été précédemment envoyé au destinataire 2 et que l'alias associé A est encore valide. Dans ce cas, il suffira de réutiliser cet alias A et éventuellement de prolonger sa période de validité.

La PFA 100 associe l'alias A au couple {MSISDN 1, MSISDN 2} et mémorise cette association selon les étapes d'association E103 et de mémorisation E105. Lors de l'étape de substitution E7, le SMSC1 remplace, dans le premier message M1, le MSISDN du premier terminal 1 (MSISDN1) par l'alias A de manière à former le message SMS anonymisé M'1 qu'il transmet lors de l'étape d'envoi E109 à destination du deuxième terminal 2 via le MSC2, dont l'adresse globale (AG MSC2) a été retournée préalablement (étape E24) par le HLR2.

Le message anonymisé M'1 est un message « SMS-DELIVER » conforme au document 3GPP TS 23.040 précité, avec les paramètres comme indiqués dans le tableau 4 ci-dessous.

**Tableau 4. Transmission du message anonymisé M'1 (SMS-DELIVER)**

| | | |
|---|---|---|
| SM-TL | TP-OA | Alias A |
| MAP | RP-OA | SMSC1 |
| | RP-DA | IMSI2 |
| SCCP | Calling Party | AG SMSC1 |
| | Called Party | AG MSC2 |

Ainsi, le premier terminal 1 n'apparaît pas sous son identité réelle (MSISDN1) mais sous son alias A sur le deuxième terminal mobile 2.

On considère le cas où le deuxième terminal 2 est autorisé à répondre au message M1 par un nombre de SMS limité dans un temps imparti, c'est-à-dire dans le cas où le premier terminal 1 à l'origine du message court anonymisé M'1 - ou son opérateur de téléphonie mobile - a fait le choix d'offrir la possibilité aux destinataires de ses messages (en particulier le destinataire 2) de répondre à ces messages.

On notera que si cette possibilité n'est pas offerte au destinataire, l'alias A sera numérique et ne contiendra par exemple que des "zéro" ou sera alpha-numérique du type "Anonyme" ou "Privé".

On va maintenant décrire les échanges effectués lors de la deuxième séquence S2 au cours de laquelle le deuxième terminal 2 répond au premier terminal 1 en lui envoyant un message SMS de réponse M2.

Après réception du message anonyme M'1 émis lors de l'étape d'envoi E109 précédente, le deuxième terminal 2 répond à ce dernier en adressant l'alias A apparaissant comme émetteur du message M'1 préalablement reçu.

Pour cela, le deuxième terminal 2 envoie, au SMSC2 dont il dépend naturellement, lors d'une étape E40 un message de réponse court M2 en utilisant un message « SMS-SUBMIT » conformément au document 3GPP TS 23.040 précité, en utilisant les paramètres tels que mentionnés dans le tableau 5 ci-dessous.

De manière avantageuse, le message court M2 est pris en charge par le SMSC2, dont l'adresse est désignée par AG SMSC2, évitant ainsi une utilisation contraignante du paramètre *Reply-Path*.

**Tableau 5. Soumission d'un message SMS-SUBMIT (message de réponse M2)**

| | | |
|---|---|---|
| SM-TL | TP-DA | Alias A |
| MAP | RP-OA | MSISDN2 |
| | RP-DA | AG SMSC2 |
| SCCP | Calling Party | AG MSC2 |
| | Called Party | AG SMSC2 |

Conformément à la procédure classique de livraison d'un message SMS, le SMSC2 interroge le HLR du destinataire du message, lors d'une étape d'interrogation E42. Dans ce cas, il s'agit d'interroger le HLR lié à l'abonné dont l'identité est représentée par l'alias A. Etant donné que le format de l'alias A est celui d'un MSI SDN, cet alias A est accessible par n'importe quel réseau de téléphonie mobile et en particulier par le deuxième réseau 20.

Dans cet exemple, le HLR du destinataire est implémenté de manière virtuelle sur la PFA 100 et noté HLRv. Toutefois, dans d'autres modes de réalisation, le HLRv pourrait être implémenté au niveau du HLR du premier réseau 10 (HLR1).

Cette interrogation du HLRv est portée, lors d'une étape d'interrogation E42, en utilisant une requête « MAP_SEND_ROUTING_INFO_For_SM » conformément au document 3GPP TS 29.002 précité avec des paramètres tels que mentionnés dans le tableau 6 ci-dessous.

**Tableau 6. Requête "MAP_SEND_ROUTING_INFO_For_SM"**

| | | |
|---|---|---|
| MAP | MSISDN | Alias A |
| | SC Address | AG SMSC2 |
| SCCP | Calling Party | AG SMSC2 |
| | Called Party | Alias A |

La requête « MAP_ SEND_ROUTING_INFO_For_SM », qui porte cette interrogation du HLRv est routée sur l'alias A représentatif du premier terminal 1 au niveau de la couche SCCP. Comme indiqué dans le tableau 6 ci-dessus, un canal de signalisation SS7 est établi sur la couche SCCP à partir de l'adresse globale du SMSC2 vers l'alias A. Les tables de routage SCCP hébergées dans les réseaux de signalisation SS7 conduisent automatiquement ce message vers le HLR virtuel (HLRv) de la PFA 100.

Au niveau de la couche MAP, l'adresse globale du SMSC2 est contenue dans le champ dénommé « SC Address » tandis que l'alias A est contenu dans le champ dénommé « MSISDN ».

Le HLR virtuel (HLRv) de la PFA 100 est tenu de transmettre au SMSC qui l'a préalablement interrogé des informations de routage nécessaires pour router le message de réponse M2. Le HLR virtuel envoie au SMSC2, lors d'une étape de réponse E44, un message « MAP_ SEND_ROUTING_INFO_For_SM » conforme au document 3GPP TS 29.002 précité et comprenant :
- un numéro IMSI égal à l'alias A associé au premier terminal 1 ; et
- une adresse globale de MSCv égale à l'adresse globale de la PFA 100.

Comme indiqué dans le tableau 7 ci-dessous, ces deux informations sont contenues respectivement dans le champ « IMSI » et dans le champ « Network Node Number » de la couche MAP.

La PFA 100 s'assure de cette manière de recevoir le message MAP ultérieur responsable de l'acheminement du message court de réponse M2 et d'y retrouver l'alias A.

**Tableau 7. Réponse MAP_SEND_ROUTING_INFO_For_SM**

| | | |
|---|---|---|
| MAP | IMSI | Alias A |
| | Network Node Number | AG PFA |
| SCCP | Calling Party | AG PFA |
| | Called Party | AG SMSC2 |

Lors d'une étape de transmission E46, le SMSC2 transmet le message de réponse M2 au MSC virtuel (MSCv) porté par la PFA 100. Cette transmission s'effectue par un message « SMS-DELIVER » conformément au document 3GPP TS 23.040 précité et avec les paramètres tels que mentionnés dans le tableau 8 ci-dessous.

La PFA 100 récupère alors l'alias A (présent au niveau MAP, dans le champ réservé à l'IMSI) et le MSISDN2 du deuxième terminal 2, ce qui lui permet de retrouver le MSISDN1 du premier terminal 1 correspondant. Pour cela, le MSCv interroge la base de données d'anonymat 36 (étape E48), y détecte (étape 50) la présence de l'alias A préalablement mémorisé en association avec le MSISDN1 et le MSISDN2, puis envoie au MSCv le MSISDN1 lors d'une étape E52.

**Tableau 8. Message SMS-DELIVER**

| | | |
|---|---|---|
| SM-TL | TP-OA | MSISDN2 |
| MAP | RP-OA | AG SMSC2 |
| | RP-DA | Alias A |
| SCCP | Calling Party | AG SMSC2 |
| | Called Party | AG PFA |

Lors d'une étape E115, la PFA 100 (MSCv) remplace l'alias A par le MSISDN1 du premier terminal 1. Lors d'une étape d'interrogation E54, la PFA 100 interroge le HLR1 sur lequel sont présentes les informations de routage nécessaires à l'acheminement du message de réponse final M'2 vers l'abonné du premier terminal 1. Cette interrogation est portée par une requête « MAP_SEND_ROUTING_INFO_For_SM) » conforme au document 3GPP TS29.002, avec les paramètres tels que mentionnés dans le tableau 9 ci-dessous.

**Tableau 9. Requête "MAP_SEND_ROUTING_INFO_For_SM"**

| | | |
|---|---|---|
| MAP | MSISDN | MSISDN1 |
| | SC Address | AG PFA |
| SCCP | Calling Party | AG PFA |
| | Called Party | MSISDN1 |

En réponse à cette requête, le HLR1 envoie à la PFA 100, l'IMSI du premier terminal 1 (IMSI1) ainsi que l'adresse globale du MSC1 du premier terminal 1 (AG MSC1) lors d'une étape de réponse E56. Ces informations sont contenues dans une réponse « MAP_SEND_ROUTING_INFO_For_SM » dont les paramètres figurent dans le tableau 10 ci-dessous.

**Tableau 10. Réponse "MAP_SEND_ROUTING_INFO_For_SM"**

| | | |
|---|---|---|
| MAP | IMSI | IMSI1 |
| | Network Node Number | AG MSC1 |
| SCCP | Calling Party | AG HLR1 |
| | Called Party | AG PFA |

Dans le cas où le HLR1 ne renvoie pas les informations de routage, le message reçu du HLR1 est immédiatement transmis au SMSC2, la PFA 100 ayant au préalable remplacé l'adresse SCCP appelante de la réponse au « MAP_SEND_ROUTING_INFO_For_SM » - adresse globale du HLR1 - par sa propre adresse globale.

Lors de l'étape finale d'envoi E117, la PFA 100 (ou plus précisémment le MSCv que la PFA implémente) transmet le message de réponse final M'2 issu du deuxième terminal 2 au MSC1 qui se charge de le déposer sur le premier terminal 1. Cette transmission est effectuée par un message « SMS-DELIVER » conforme au document 3GPP TS 23.040, avec les paramètres figurant dans le tableau 11 ci-dessous.

**Tableau 11. Message SMS-DELIVER**

| | | |
|---|---|---|
| SM-TL | TP-OA | MSISDN2 |
| MAP | RP-OA | SMSC2 |
| | RP-DA | IMSI1 |
| SCCP | Calling Party | AG PFA |
| | Called Party | AG MSC1 |

Si la livraison se déroule avec succès, l'acquittement de la livraison du message de réponse final M'2 au deuxième terminal 2 est transmis au SMSC2 du deuxième réseau 20, lors d'une étape d'acquittement de réception E60, via la PFA 100 (plus précisémment via le MSCv).

Si la livraison du message de réponse final M'2 échoue, un non acquittement est renvoyé par la PFA 100 au SMSC2 du deuxième réseau 20. Celle-ci 100 renvoie au SMSC2 le message qu'elle a reçu de la part du MSC1.

Dans les deux cas, la PFA 100 remplace l'adresse SCCP appelante (Calling Party) de la réponse -adresse globale du MSC1- par son adresse globale (AG FPA), dans un message du type SMS-DELIVER-REPORT conforme au document 3GPP TS 23.040, comme indiqué dans le tableau 12 ci-dessous.

**Tabelau 12. Message SMS-DELIVER-REPORT**

| | | |
|---|---|---|
| SM-TL | Cause d'échec éventuelle | |
| MAP | Erreur éventuelle | |
| SCCP | Calling Party | AG PFA |
| | Called Party | AG SMSC2 |

On notera que la PFA 100 maintient une liste d'informations concernant les messages en attente dite liste « Message Waiting Data » (MWD) du type de celle hébergée sur un HLR comme indiqué dans le document 3GPP TS 29.002 précité, cette liste pouvant être mise à jour dès l'instant que, dans un cas de réponse à un message anonyme, le HLR du destinataire - HLR1 dans le cas présent - fait une entrée dans sa liste MWD.

On distingue deux cas d'entrée dans la liste MWD du HLR du destinataire.

Dans un premier cas, le HLR du destinataire (HLR1) répond sans fournir d'informations de routage (priorité basse et abonné absent ; voir document 3GPP TS 29.002) (étapes E54, E56).

Dans un deuxième cas, le SMSC émetteur du SMS envoie un message « MAP_REPORT_DELIVERY_STATUS » pour s'enregistrer dans la liste MWD du HLR (voir document 3GPP TS 29.002 précité). Dans ce deuxième cas, le message « MAP_REPORT_DELIVERY_STATUS » est routé au niveau SCCP sur le MSISDN du destinataire, tout comme le message « MAP_SEND_ROUTING_INFO_For_SM ».

Dans le cas présent, si le SMSC2 tente d'envoyer ce type de message vers le HLR1, il sera dérouté sur le HLRv de la PFA 100, tout comme le message « MAP_SEND_ROUTING_INFO_For_SM ».

Le HLRv se chargera alors :
- de transmettre le message au HLR1, sous l'identité (SCCP et MAP) de la PFA 100 ; et
- de transférer la réponse du HLR1 au SMSC sous sa propre identité.

La PFA 100 usurpant dans tous les cas l'identité du SMSC émetteur, c'est elle qui sera alertée du retour du MSISDN destinataire sur son réseau à travers le message « MAP_ALERT_SC ». La PFA 100 transfère vers le SMSC en attente de livraison du (des) message(s) court(s) cette alerte sous sa propre identité.

Dès l'alerte reçue et acquittée (s'il y a lieu, selon la version MAP), la PFA 100 supprimera l'entrée correspondante dans sa liste MWD.

L'invention prévoit aussi la possibilité pour un destinataire d'un message MMS dont l'émetteur ne souhaite pas divulguer son identité de répondre au message. L'alias de l'émetteur est utilisé pour permettre au destinataire de répondre au message reçu. Les différentes étapes de ce procédé sont les suivantes :
- un utilisateur émetteur A compose puis envoie à un utilisateur destinataire B un message en cachant son identité,
- un serveur de messages mulimédia (MMS-C) insère dans le champ "adresse de l'émetteur" du message MMS un alias correspondant à l'utilisateur A. Le MMS-C conserve en mémoire la correspondance entre l'alias de A et le MSISDN de A.
- le MMS-C envoie le message à l'utilisateur B
- l'utilisateur B répond au message en utilisant l'alias de l'utilisateur A
- la correspondance entre l'alias de A et le MSISDN de A permet au MMS-C d'acheminer le message vers le destinataire A.

Dans le cas où l'utilisateur A et l'utilisateur B sont clients des réseaux différents (par exemple : A est client d'un opérateur # 1 et B est client d'un opérateur #2), le procédé comme décrit ci-dessus comprend des étapes additionnelles. Le MMS-C de l'opérateur 1 après avoir déterminé que le l'utilisateur B n'est pas un client de "son" réseau mais client d'un autre opérateur (opérateur # 2) transfère le message MMS vers le MMS-C de l'opérateur #2 (dont il connait l'adresse). Le MMS-C de l'opérateur #2 se charge de délivrer le message sur le mobile du destinataire de manière classique. Ce transfert se fait via l'interface normalisée MM4 (basée sur le protocole SMTP). Une etape comparable, mutatis mutandis, se déroulera pendant la réponse de l'utilisateur B au message. Dans les deux cas (notamment, utilisateur A et utilisateur B clients du même réseau et utilisateur A et utilisateur B clients des réseaux différents) le message reçu et la réponse au message reçu passent par le même MMS-C où est enregistrée la correspondance entre alias de A et MSISDN de A permettant ensuite le bon aiguillage de la réponse au message de l'utilisateur B à l'utilisateur A.

## Revendications

1. Procédé d'envoi d'un deuxième message (M2) numérique en réponse à un premier message (M'1) numérique, ledit procédé comprenant :
- une étape de réception dudit premier message (M'1) par au moins un deuxième terminal (2), ledit premier message comprenant comme adresse de réponse (A) un troisième identifiant,
- une étape d'envoi dudit deuxième message (M2) depuis ledit deuxième terminal (2) à destination de ladite adresse de réponse (A), et
- une étape de remplacement dans ledit deuxième message (M2) dudit troisième identifiant par un premier identifiant (N1) d'un premier terminal (1), à partir d'une association faite préalablement entre ledit troisième identifiant et ledit premier identifiant (N1),
**caractérisé en ce que** ladite adresse de réponse (A) est associée à un couple d'identifiants comprenant ledit premier identifiant (N1) et un deuxième identifiant (N2).

2. Procédé selon la revendication 1 **caractérisé en ce que** ledit procédé comprend en outre :
- une étape d'interrogation d'un enregistreur de localisation nominal (HLRv) liée audit troisième identifiant, et
- une étape de transmission dudit deuxième message (M2) vers un dispositif de communication (MSCv).

3. Procédé selon la revendication 1 **caractérisé en ce que** ledit procédé comprend en outre :
- une étape de passage dudit premier message (M'1) par un serveur de messages multimédia (MMSC) et
- une étape de passage dudit deuxième message (M2) par le même serveur.

4. Procédé selon l'une quelconque des revendications 1 à 3, **caractérisé en ce que** ladite adresse de réponse (A) est choisie, lors de ladite étape d'association, dans une liste d'adresses conformes à la norme E.164.

5. Procédé selon la revendication 4, **caractérisé en ce que** ladite liste d'adresses est préalablement allouée à un premier réseau (10).

6. Procédé selon la revendication 4, **caractérisé en ce que** ladite liste d'adresses est préalablement générée au sein dudit premier réseau (10).

7. Procédé selon l'une quelconque des revendications 1 à 6, **caractérisé en ce que** ladite adresse de réponse (A) est choisie parmi une liste de numéros de type MSISDN (Mobile Station ISDN).

8. Procédé selon l'une quelconque des revendications 1 à 7, **caractérisé en ce que** ladite adresse de réponse (A) est mémorisée dans une base de données d'anonymat (36) en attribuant une durée de validité à ladite association.

9. Dispositif d'envoi d'un deuxième message (M2) numérique en réponse à un premier message (M'1) numérique, ledit dispositif comprenant :
- des moyens de réception dudit premier message (M'1) par au moins un deuxième terminal (2), ledit premier message comprenant comme adresse de réponse (A) un troisième identifiant,
- des moyens d'envoi dudit deuxième message (M2) depuis ledit deuxième terminal (2) à destination de ladite adresse de réponse (A), et
- des moyens de remplacement dans ledit deuxième message (M2) dudit troisième identifiant par un premier identifiant (N1) d'un premier terminal (1), à partir d'une association faite préalablement entre ledit troisième identifiant et ledit premier identifiant (N1),
**caractérisé en ce que** ladite adresse de réponse (A) est associée à un couple d'identifiants comprenant ledit premier identifiant (N1) et un deuxième identifiant (N2).

10. Dispositif selon la revendication 9, **caractérisé en ce qu'**il comporte des moyens d'obtention d'une liste d'adresses conformes à la norme E.164 préalablement allouées à un premier réseau (10), lesdits moyens de mémorisation (36) étant adaptés à associer ledit premier identifiant (N1) à ladite adresse de réponse (A) choisie parmi cette liste.

11. Dispositif selon l'une quelconque des revendications 9 et 10, **caractérisé en ce que** ladite adresse de réponse (A) est choisie parmi une liste de numéros de type MSISDN (Mobile Station ISDN).

12. Dispositif selon l'une quelconque des revendications 9 à 11, **caractérisé en ce qu'**il est adapté à simuler le comportement d'un MSC (Mobile Switching Centre) et d'un HLR (Home Location Register) en utilisant ladite adresse de réponse (A) pour effectuer un routage dudit deuxième message (M'2) sur ledit dispositif selon un protocole d'échange classique.

13. Dispositif selon la revendication 12, **caractérisé en ce qu'**il comporte un serveur de SMS.

## Patentansprüche

1. Verfahren zum Senden einer zweiten digitalen Nachricht (M2) als Antwort auf eine erste digitale Nachricht (M'1), wobei das Verfahren aufweist:
- einen Schritt des Empfangens der ersten Nachricht (M'1) durch mindestens ein zweites Endgerät (2), wobei die erste Nachricht als Antwortadresse (A) eine dritte Kennung aufweist,
- einen Schritt des Sendens der zweiten Nachricht (M2) von dem zweiten Endgerät (2) an die Antwortadresse (A) und
- einen Schritt des Ersetzens der dritten Kennung in der zweiten Nachricht (M2) durch eine erste Kennung (N1) eines ersten Endgeräts (1) ausgehend von einer Verbindung, die zuvor zwischen der dritten Kennung und der ersten Kennung (N1) hergestellt wird,
**dadurch gekennzeichnet, dass** die Antwortadresse (A) mit einem Paar Kennungen verbunden wird, das die erste Kennung (N1) und eine zweite Kennung (N2) aufweist.

2. Verfahren nach Anspruch 1, **dadurch gekennzeichnet, dass** das Verfahren ferner aufweist:
- einen Schritt des Abfragen eines Heimatregisters (HLRv), der mit der dritten Kennung verbunden ist, und
- einen Schritt des Übertragens der zweiten Nachricht (M2) zu einer Kommunikationsvorrichtung (MSCv).

3. Verfahren nach Anspruch 1, **dadurch gekennzeichnet, dass** das Verfahren ferner aufweist:
- einen Schritt des Weiterleitens der ersten Nachricht (M'1) durch einen Multimedia-Nachrichten-Server (MMSC) und
- einen Schritt des Weiterleitens der zweiten Nachricht (M2) durch den gleichen Server.

4. Verfahren nach einem der Ansprüche 1 bis 3, **dadurch gekennzeichnet, dass** die Antwortadresse (A) bei dem Schritt des Verbindens aus einer Liste von Adressen, die dem E.164-Standard entsprechen, ausgewählt wird.

5. Verfahren nach Anspruch 4, **dadurch gekennzeichnet, dass** die Liste von Adressen zuvor einem ersten Netz (10) zugewiesen wird.

6. Verfahren nach Anspruch 4, **dadurch gekennzeichnet, dass** die Liste von Adressen zuvor in dem ersten Netz (10) generiert wird.

7. Verfahren nach einem der Ansprüche 1 bis 6, **dadurch gekennzeichnet, dass** die Antwortadresse (A) aus einer Liste von Nummern des Typs der MSISDN-Nummern (Mobile Station ISDN) ausgewählt wird.

8. Verfahren nach einem der Ansprüche 1 bis 7, **dadurch gekennzeichnet, dass** die Antwortadresse (A) in einer Anonymitätsdatenbank (36) gespeichert wird, indem der Verbindung eine Gültigkeitsdauer zugeordnet wird.

9. Vorrichtung zum Senden einer zweiten digitalen Nachricht (M2) als Antwort auf eine erste digitale Nachricht (M'1), wobei die Vorrichtung aufweist:
- Mittel zum Empfangen der ersten Nachricht (M'1) durch mindestens ein zweites Endgerät (2), wobei die erste Nachricht als Antwortadresse (A) eine dritte Kennung aufweist,
- Mittel zum Senden der zweiten Nachricht (M2) von dem zweiten Endgerät (2) an die Antwortadresse (A) und
- Mittel zum Ersetzen der dritten Kennung in der zweiten Nachricht (M2) durch eine erste Kennung (N1) eines ersten Endgeräts (1) ausgehend von einer Verbindung, die zuvor zwischen der dritten Kennung und der ersten Kennung (N1) hergestellt wird,
**dadurch gekennzeichnet, dass** die Antwortadresse (A) mit einem Paar Kennungen verbunden wird, das die erste Kennung (N1) und eine zweite Kennung (N2) aufweist.

10. Vorrichtung nach Anspruch 9, **dadurch gekennzeichnet, dass** sie Mittel zum Erhalten einer Liste von Adressen aufweist, die dem E.164-Standard entsprechen, die zuvor einem ersten Netz (10) zugewiesen worden sind, wobei die Mittel zum Speichern (36) geeignet sind, die erste Kennung (N1) mit der Antwortadresse (A) zu verbinden, die aus dieser Liste ausgewählt ist.

11. Vorrichtung nach einem der Ansprüche 9 und 10, **dadurch gekennzeichnet, dass** die Antwortadresse (A) aus einer Liste von Nummern des Typs der MSISDN-Nummern (Mobile Station ISDN) ausgewählt ist.

12. Vorrichtung nach einem der Ansprüche 9 bis 11, **dadurch gekennzeichnet, dass** sie geeignet ist, das Verhalten eines MSC (Mobile Switching Centre) und eines HLR (Home Location Register) unter Verwendung der Antwortadresse (A) zu simulieren, um ein Routing der zweiten Nachricht (M'2) auf der Vorrichtung gemäß einem herkömmlichen Austauschprotokoll durchzuführen.

13. Vorrichtung nach Anspruch 12, **dadurch gekennzeichnet, dass** sie einen SMS-Server aufweist.

## Claims

1. Method for sending a second digital message (M2) in response to a first digital message (M'1), said method comprising:
- a step of reception of said first message (M'1) by at least one second terminal (2), said first message comprising, as response address (A), a third identifier,
- a step of sending of said second message (M2) from said second terminal (2) to said response address (A), and
- a step of replacement, in said second message (M2), of said third identifier with a first identifier (N1) of a first terminal (1), from an association made previously between said third identifier and said first identifier (N1),
**characterized in that** said response address (A) is associated with a pair of identifiers comprising said first identifier (N1) and a second identifier (N2).

2. Method according to Claim 1, **characterized in that** said method further comprises:
- a step of interrogation of a home location register (HLRv) linked to said third identifier, and
- a step of transmission of said second message (M2) to a communication device (MSCv).

3. Method according to Claim 1, **characterized in that** said method further comprises:
- a step of passage of said first message (M'1) via a multimedia message server (MMSC) and
- a step of passage of said second message (M2) via the same server.

4. Method according to any one of Claims 1 to 3, **characterized in that** said response address (A) is chosen, in said association step, from a list of addresses conforming to the E.164 standard.

5. Method according to Claim 4, **characterized in that** said list of addresses is previously allocated to a first network (10).

6. Method according to Claim 4, **characterized in that** said list of addresses is previously generated within said first network (10).

7. Method according to any one of Claims 1 to 6, **characterized in that** said response address (A) is chosen from a list of numbers of MSISDN (Mobile Station ISDN) type.

8. Method according to any one of Claims 1 to 7, **characterized in that** said response address (A) is stored in an anonymity database (36) with a period of validity assigned to said association.

9. Device for sending a second digital message (M2) in response to a first digital message (M'1), said device comprising:
- means for said first message (M'1) to be received by at least one second terminal (2), said first message comprising, as response address (A), a third identifier,
- means for said second message (M2) to be sent from said second terminal (2) to said response address (A), and
- means for said third identifier to be replaced in said second message (M2) with a first identifier (N1) of a first terminal (1), from an association made previously between said third identifier and said first identifier (N1),
**characterized in that** said response address (A) is associated with a pair of identifiers comprising said first identifier (N1) and a second identifier (N2).

10. Device according to Claim 9, **characterized in that** it comprises means for obtaining a list of addresses conforming to the E.164 standard previously allocated to a first network (10), said storage means (36) being adapted to associate said first identifier (N1) with said response address (A) chosen from that list.

11. Device according to either one of Claims 9 and 10, **characterized in that** said response address (A) is chosen from a list of numbers of MSISDN (Mobile Station ISDN) type.

12. Device according to any one of Claims 9 to 11, **characterized in that** it is adapted to simulate the behaviour of an MSC (Mobile Switching Centre) and of an HLR (Home Location Register) by using said response address (A) to perform a routing of said second message (M'2) to said device according to a conventional exchange protocol.

13. Device according to Claim 12, **characterized in that** it comprises an SMS server.
